# EUROPEAN PATENT APPLICATION

(11) **EP 4 530 966 A1**
(43) Date of publication of application: **02.04.2025**
(21) Application number: 22950985.6
(22) Date of filing: 15.07.2022
(51) Int. Cl.: G06Q 90/00, H04W 64/00, H04W 8/08, H04W 4/021

(54) **METHOD, SYSTEM AND COMPUTER PROGRAM FOR CHARACTERISING GEOGRAPHIC AREAS**

(71) Applicant: TELEFÓNICA IOT & BIG DATA TECH, S.A., 28050 Madrid (ES)
(72) Inventor: BARBADO GONZÁLEZ, Alberto, 28050 Madrid (ES); DÍAZ SÁNCHEZ, Elena, 28050 Madrid (ES); LORENTE BOROX, Ana María, 28050 Madrid (ES); AMENEDO CASTRO, Mar, 28050 Madrid (ES)
(74) Representative: Carlos Hernando, Borja
(86) International application number: PCT/ES2022/070460
(87) International publication number: WO 2024/013407

(57) **Abstract**

The present invention discloses a method, system and computer program for characterising geographic areas. The method comprises accessing user data from a mobile network operator, said data being associated with active and/or passive network events from the connections established between user mobile devices and mobile network operator towers; calculating a set of user parameters using said accessed data, the calculation of the parameters comprising: calculating a visit parameter, calculating points of interest of each user, and obtaining web browsing data from mobile devices based on obtaining network traffic from each mobile device in the network; and determining a characterisation profile of a geographic area by calculating the behaviour of the temporary and permanent resident users in said geographic area.

## Description

### Technical field

The present invention relates to a method, system and computer programs for characterising (or profiling) geographic areas, in particular, using data from a mobile network operator. More particularly, the present invention allows a specific geographic area (e.g. a census tract) ro be profiled, based on the mobility, travel and web browsing behaviour of the population residing therein, as determined from the data that are collected from the mobile network and telephone lines.

### Background of the invention

There are user profiling/characterisation solutions based on their browsing history, or based on their mobility, which can include location via GPS or via mobile device.

For example, patent US10163113B2 shows a method for generating a user profile based on capturing a user's periodic location from the mobile phone or GPS information. A location history is generated from the correlation of accumulated locations. The location history is then analysed to detect user travel and dwell patterns. That information can be combined with business, commercial classification or Point of Interest (POI) databases to identify a user home, work, or other likely locations based on dwell times, time of day, and other parameters.

Patent US10592914B2 shows a method for determining a user device dwell time graph based on geolocations, which are individually quite inaccurate, but which when accumulated from a history and device camping time provide a greater accuracy.

Patent US10515392B1 shows a method for geographic, temporal and location-based detection and analysis of mobile communication devices in a communication network, where it collects the location of the terminals from the mobile cells; and from the history it establishes temporal boundaries and carries out a pattern analysis to correlate possible points of interest of the users.

### Disclosure of the invention

According to a first aspect, exemplary embodiments of the present invention provide a computer-implemented method for characterising geographic areas. The method comprises: accessing user data from a user mobile network operator, said data being associated with active and/or passive network events from the connections established between the user mobile devices and mobile network operator towers; calculating a set of user parameters using said accessed data, calculating the set of parameters comprising: calculating a visit parameter, calculating points of interest of each user, and obtaining user web browsing data from the mobile devices based on obtaining network traffic from each mobile device in the network; and determining a characterisation profile of a geographic area by calculating the behaviour of the temporary and permanent resident users in said geographic area.

According to the present invention, calculating the behaviour of resident users comprises: calculating a first set of variables related to the daily mobility of resident users based on determining when and where an overnight stay has been made using a first dataset including a unique identifier of the mobile device of each resident user and parameters associated with the calculated visit parameter and configurable parameters indicating times where a network event must be to be considered an overnight stay; calculating a second set of variables related to travel of resident users based on the calculation of at least two of the following: the identification of the travel route of resident users using at least a second dataset including information on overnight stays within the domestic territory, a third dataset related to roaming and a fourth dataset including information on the unique identifier of the mobile device of each resident user and parameters associated with the points of interest calculated, identifying frequent destinations of resident users using the first dataset and the fourth dataset, identifying outings made by resident users using at least the first dataset, the second dataset, the fourth dataset and information of the identified frequent destinations; and calculating a third set of variables related to web browsing by resident users based on: determining an average interest index per browsing category using a fifth dataset including the unique identifier of the mobile device of each resident user, a time period associated with web browsing, a category of web browsing and the total time of web browsing, and determining an individual interest index, per resident user and category, by dividing the web browsing of a particular resident user by the average interest index determined.

According to a second aspect, exemplary embodiments of the present invention also provide a system for characterising geographic areas. The system includes: a memory or database configured to store user data from a mobile network operator, said data being associated with active and/or passive network events from the connections established between user mobile devices and mobile network operator towers; and a computing unit including a memory and at least one processor.

The processor is adapted and configured to characterise a geographic area by performing the following steps: calculating a set of user parameters using said accessed data, calculating the set of parameters comprising: calculating a visit parameter, calculating user points of interest, and obtaining web browsing data from the user mobile devices based on obtaining network traffic from each mobile device in the network; determining a characterisation profile of the geographic area by calculating the behaviour of the temporary and permanent resident users in said geographic area, said calculation of the behaviour of the resident users including: calculating a first set of variables related to the daily mobility of resident users based on the determination of when and where an overnight stay has taken place using a first dataset including a unique identifier of the mobile device of each resident user and parameters associated with the calculated visit parameter and configurable parameters that indicate an hour range in which a network event must be found to be considered an overnight stay; calculating a second set of variables related to resident user trips based on the calculation of at least two of: identifying the travel route of resident users using at least a second dataset including information on overnight stays within the domestic territory, a third dataset related to roaming and a fourth dataset including information on the unique identifier of the mobile device of each resident user and parameters associated with the calculated points of interest, the identification of frequent destinations of resident users using the first dataset and the fourth dataset, the identification of outings taken by resident users using at least the first dataset, the second dataset, the fourth dataset and information of the identified frequent destinations; and calculating a third set of variables corresponding to web browsing by resident users based on: determining an average interest index per browsing category using a fifth dataset including the unique identifier of the mobile device of each resident user, a time period associated with web browsing, a web browsing category and web browsing total time, and determining an individual interest index, per resident user and category, by dividing a particular resident user web browsing by the average interest index determined.

Other embodiments of the invention which are disclosed herein also include computer program products for performing the steps and operations of the method proposed in the first aspect of the invention. More particularly, a computer program product is an embodiment that has a computer-readable medium including computer program instructions coded therein which, when executed in at least one processor of a computer system, cause the processor to perform the operations indicated herein as embodiments of the invention.

In some exemplary embodiments, determining the characterisation profile of the geographic area further comprises calculating a socio-demographic profile of the resident users, including gender, age band and/or income level, using said data associated with active and/or passive network events. Additionally, in some exemplary embodiments, a statistical weight can be assigned to each resident user using census information from the geographic area for domestic resident users and information obtained from external information sources for international resident users, and combining the assigned statistical weights by updating the fourth dataset as a result. It is even possible to extrapolate the calculation of resident user behaviour in said geographic area and the updated fourth dataset to the general population and aggregate the extrapolated information by micro-segments based on a location of the geographic area and the age band, gender and income level of the resident users.

In some exemplary embodiments, one or more sources of information may also be used comprising connectivity variables, including access to public transport, underground, and/or bus; household variables, including average household size, composition, and/or number of households; and/or urbanity variables, including typology of dwellings based on their age, size and type of facilities; typology of area depending on whether it is residential, commercial/leisure or offices.

In some exemplary embodiments, calculating the visit parameter is performed by aggregating a certain continuous number of network events at the given geographic location, said continuous number of network events having a predefined minimum duration.

In some exemplary embodiments, calculating the points of interest comprises executing machine learning models on the calculated visit parameters.

In some exemplary embodiments, the calculated points of interest include at least the identification of the users' place of residence and place of work.

According to the present invention, the active network events comprise Call Detail Records (CDRs), including phone calls made by the mobile devices, and Extended Detail Records (XDRs), including web browsing information from the mobile devices.

In some exemplary embodiments, the passive network events comprise information regarding power-on, coverage recovery, cell change and/or network change of mobile devices.

In some exemplary embodiments, calculating the visit parameter further comprises detecting and eliminating flickering/intermittency events between network towers.

According to the present invention, the first group of variables related to the daily mobility of resident users may comprise one or more of: total number of journeys made in a year, total number of journeys made on weekdays and/or weekends, total number of journeys made in the morning, afternoon and/or evening, total number of journeys made for sporadic and regular journeys, and total number of journeys made based on distance travelled, differentiating between short, medium and long journeys.

In some exemplary embodiments, the second set of variables related to resident user trips comprises one or more of: total number of trips by duration thereof, total number of trips by frequency, and total number of trips by domestic or international destination.

In some exemplary embodiments, the third group of variables related to web browsing by resident users comprises which types of web pages/applications resident users consult, including one or more of: food, arts and entertainment, science, sports, games, family, animals, society, fashion, travel, shopping, health, among others.

Therefore, the present invention allows a given geographic location (e.g., a census tract) to be profiled based on the behaviour of its residents, complementing this information (optionally) with external open data sources. This allows answering different business questions, for example, to know what people in a geographic area are like in order to plan activities on specific themes or to open a certain type of business. These data also serve as additional variables for training proprietary models or for third party analytical models. For the latter case, the micro-segments can be cross-referenced with their own data in order to train their proprietary algorithms.

### Brief description of the drawings

The foregoing and other features and advantages will be more fully understood from the following detailed description, by way of mere illustration and not limitation, of some exemplary embodiments with reference to the attached drawings, wherein:
Figure 1 schematically illustrates the flow of a method for characterising geographic areas, according to an exemplary embodiment of the present invention.
Figure 2 is a visual scheme of the positioning of a user with the probabilistic model, where the connectivity parameters with the towers, together with the information of which towers give coverage to an event, determines the probability of being in one micro cell or another.
Figure 3 schematically illustrates the flow of the method for characterising geographic areas, according to another exemplary embodiment of the present invention.
Figure 4 shows an example of using external open data sources to characterise an area, together with profiling data based on the MNO. For this case, the use of data from the National Institute of Statistics, data from OpenStreetMap, and data from the different land registry branches in Spain: the national branch, the Navarra branch, the Alava branch, the Bizkaia branch, and the Gipuzkoa branch.

### Detailed description of the invention and exemplary embodiments

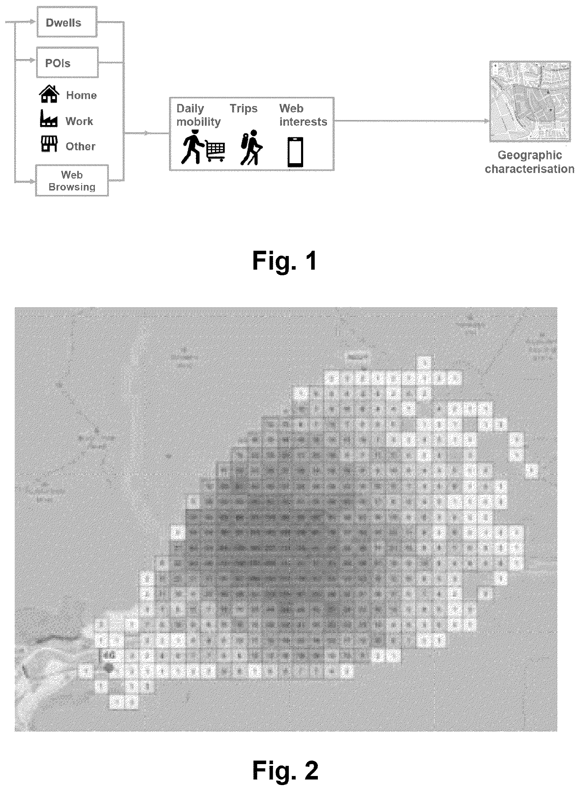

Figure 1 shows an exemplary embodiment of the method for characterising geographic areas based on the behaviour and profile of their residents.

The characterised geographic area can have different sizes (from a given *grid* of the territory, e.g. 250x250m, to the whole territory of the country). By way of example, the present invention will refer to a characterisation at census tract level.

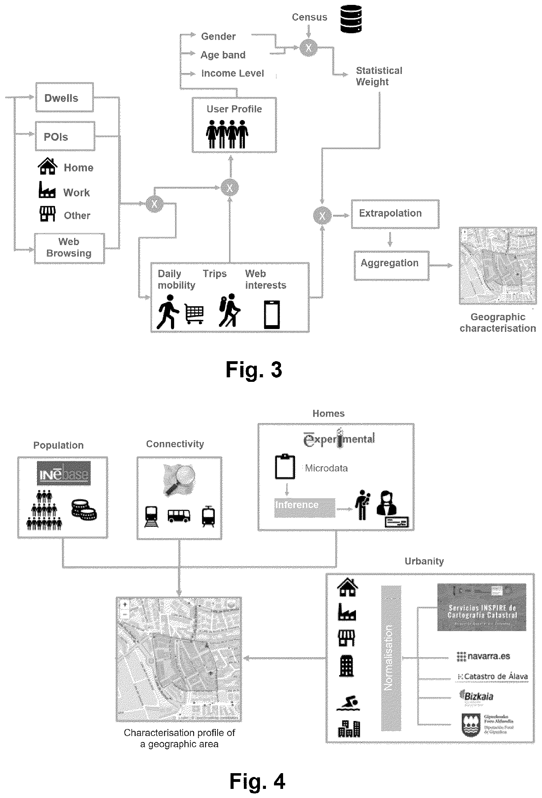

According to the present invention, the behaviour of residents can be characterised with different types of variables. Particularly, and as Figure 1 illustrates, behaviour is characterised in terms of variables related to the daily mobility of users, with variables related to their tourist trips, and variables related to their web browsing. Optionally, in other exemplary embodiments, as illustrated in Figure 3, behaviour can also be characterised by taking into account variables related to the socio-demographic profile of the users.

The present invention uses data from a Mobile Network Operator (*MNO*). These data is generated by the events of the connections established by the mobile devices to the network towers (BTS, *Base Transceiver Station*). Such events can be classified as either active or passive events.

Within the active events, information such as CDRs (*Call Detail Record*), which include events such as calls made by a device, is collected. In these cases information is available of the device making the call, the tower(s) to which it connects, the *timestamp* of the event and the device receiving the call, as well as the tower to which the latter device connects. Moreover, another type of active events are the so-called XDR (*eXtended Detail Record*), which include information such as the web browsing of a device. Unlike the previous events, in this case no information from a receiving device is available, but rather only the information of the device performing the event, the tower to which it connects, and its *timestamp.* Along with this, information is available about where the device is browsing (e.g., which website or application it is using). A formal definition of such events can be found in Pappalardo, L., et al. (2021). "Evaluation of home detection algorithms on mobile phone data using individual-level ground truth. EPJ data Science", 10(1), 29.

Along with active events, the present invention collects information from passive events generated by a device in the network, largely framed within what is called MSD (*Mobile Signalling Data*). These types of events are generated continuously by a device, and in many cases do not depend on the user actively taking an action to do so (unlike the previous dataset). These data includes events such as *cell handovers* (when a device moves from one cell's coverage area to another cell's coverage area), or the switching on of a phone or coverage recovery.

The following table shows a summary of events within the two categories mentioned above.

**Table 1. Classification of the different types of network events, according to whether they are active or passive**

| **ACTIVE** | **PASSIVE** |
|---|---|
| CALLS | POWER-ON |
| SMS | RECOVERY COVERAGE |
| WEB BROWSING | CELL CHANGE |
| USE OF APPLICATIONS | NETWORK CHANGE |

In some exemplary embodiments, the data received from the network is pre-anonymised in order to ensure compliance with relevant privacy regulations.

As previously discussed, network events generated by a device are collected at the tower level. That is, the exact location of the device is not known, but rather the tower(s) to which it is connected, together with specific parameters of the connection itself (e.g., signal strength). For this reason, there are different techniques in the literature that, based on this information, seek to locate the device in a specific geographic location on the basis of this information. For example, one such approach is known as Voronoi Tesselation, which determines a coverage area around the towers, so that the device would be located within the area of the particular tower serving the same.

Although the present invention is agnostic to how the geographic location of a device is performed based on tower connection information, some exemplary embodiments are based on the information provided by a probabilistic model, whereby a transversal and a longitudinal probability distribution is generated based on a priori information of device-tower connection data (e.g., signal strength or tower type) as well as other a priori data related to the mapping of the locations (e.g. type of terrain, population, buildings...). With this, a micro grid (e.g. 250x250) of the space is made, and each of its cells is assigned a probability that the device is located therein. If there are multiple cells that provide coverage to a device when it generates an event, information from all cells is used to assign probabilities to grid cells. Figure 2 shows an example for the coverage area of a tower for a specific device event.

Once the locations of the various events are available, the present invention aggregates the continuous events to generate what is called a visit parameter or *dwell.* A *dwell* shall be a specified number of continuous events for which, in addition, there is a specified minimum duration. Thus, they are used to represent user stays in certain areas. In the process of generating these *dwells,* different rules are also available to detect and eliminate inter-tower flickering/intermittency events (so that no user is considered to stay in a given area if these events are due to the inter-tower flickering/intermittency phenomenon).

Regarding the *dwells,* the present invention may use machine learning models for geospatial clustering, so that habitual patterns of user mobility can be found in an unsupervised manner. These give rise to points of interest (POls), which can identify the places where a user resides/works, among others.

In an exemplary embodiment, the first step in the POI type identification process is to identify the place of residence of the users based on the information of each user. There are several studies in the literature on how to use data from an MNO to detect the place of residence of a user using HDA (Home Detection Algorithms) (e.g., Pappalardo, L., et al. (2021). "Evaluation of home detection algorithms on mobile phone data using individual-level ground truth. EPJ data Science", 10(1), 29). The present invention is agnostic to this, although it uses a Bayesian approach similar to that described in Tennekes, M., & Gootzen, Y. A. (2021). "A Bayesian approach to location estimation of mobile devices from mobile network operator data*"* where the starting point is the probability distribution of a user being in a certain area based on the information from the towers covering the user's connectivity events, and, using the information from the previously described *dwells,* aggregating those which occur in a nearby environment, together with the event time information, the geographic characterisation of the area using information from external sources, and the event frequency of a user in an area, the census tract corresponding to the place of residence of the user is determined.

A similar process is carried out to determine the place of work of the user. POls corresponding to place of residence or place of work are classified by default as "other". This is because the POls that are of most interesting to know explicitly are the POls of place of residence and work, as they are the most common in the mobility of a user.

In addition to the mobility data described above, the present invention also collects web browsing information. This data may include, for example, a categorisation of the websites or applications accessed by the device, together with information on the make and model of the device. This information, similar to the other sources discussed above, is obtained from the traffic of the device in the network. In this way, the domains or applications accessed by a particular device are identified and subsequently characterised into different browsing categories. These data, collected at device level, is preferably also anonymised before being received by the proposed system, as is the case for all other data sources received from the network.

Using the information described above, the present invention applies a process for first profiling users and subsequently profiling a location or geographic area based on the users found therein. The present invention focusses on profiling a location based on the users residing therein. However, the process would be similar to also profile the location based on the users accessing the same (e.g. for work or tourism).

According to the exemplary embodiment shown in figure 1, from the proposed system or platform the information of the *dwells,* POls and web browsing is available and different types of variables are calculated to characterise the behaviour of the users in order to finally be able to determine the characterisation profile of the geographic area.

In particular, the following families of variables are proposed for initial profiling of user behaviour based on MNO data (although others could be included): variables related to daily mobility, variables related to travel and variables related to web interests. The variables related to daily mobility capture aspects of how users' day-to-day mobility is (e.g., how many trips they make at night). Moreover, travel variables refer to tourism aspects, such as how many international trips a user takes or how long those trips are. Finally, variables related to web interests refer to users' browsing (e.g., what types of websites/applications a user browses the most).

The different algorithms/processes used for this purpose are described below:

### - Algorithm to identify overnight stays:

In the first instance, it is determined when and where a user has stayed overnight. This is calculated with the so-called "overnight stays process" algorithm. This algorithm receives the *table_input* data table (or first dataset), together with configurable parameters indicating the hours at which an event must be found to be considered an overnight stay (*time_interval_start* and time_interval_end). Thus, there will be overnight stays if the last event of the day is after *time_interval_start* or if the first event of the following day is before *time_interval_end.* The last input parameter is *min_pernocta_time* which specifies the minimum duration that *dwells* must have to be considered as overnight stays.

Intuitively, the algorithm looks at the last events of the day/first events of the following day for each user in order to know, first, if these could be overnight stays, and second, if these events correspond to the same *dwell* split into different days, but corresponding to the same overnight stay event. It is important to analyse the first event of the following day as it could happen that the overnight stay of a day as such is not reflected in the last event of that day, but is reflected in the user's early morning events, which would already appear in the following day's data.

A homogeneous pattern of overnight stays is therefore assumed for all users, although in certain individual cases it may be different. In any case, the present invention could use another criterion for inferring overnight stays, which takes into account the usual pattern of individual users, in order to know whether they tend to make overnight stays at one time slot of the day or another. In this way, this algorithm could be applied in general, and for cases where overnight stays tend to be in other time slots, as there is no longer the problem of continuity between days, it would simply ensure that the *dwell* falls in the particular time slot of that user and exceeds a certain duration.

The input data table, *table_input,* particularly comprises the following fields:
- *userid:* unique (hashed) device identifier associated with a user
- *date_dt: dwell* date
- *start_dt:* timestamp with the start of the *dwell*
- *end_dt:* timestamp with the end of the *dwell*
- *location_id:* unique location of the *dwell* (e.g., census tract code). Other granularity levels can be used).

With this, in point 1), the algorithm obtains the location (*first_location_id_t1*), start *(first_start_dt_t1),* and end (*first_end_dt_t1*) of the first dwell of the following day, storing that information as additional columns inside the *table_input* input table and then filtering and keeping only one record per day and user with the function *getLastEvent,* corresponding to the last event of the day.

Subsequently, for each combination of user (*userid*), and date (*date_dt*), it extracts the information of the last dwell of the day (*location_id, start_dt, end_dt*) together with that of the first dwell of the following day (*first_location_id_t1, first_start_dt_t1*, *first_end_dt_t1*).

This, in 2), results in 4 identifiers representing whether the last location of the day matches the first location of the following day (*flag_same_location*), whether the last dwell of the day is within the predefined interval (*flag_pernocta_t0*), whether the start of the first event of the following day is within the interval (*flag_start_dt_t1*), and whether the end of the first dwell of the following day is within the interval (*flag_end_dt_t1*). Only if at least the last *dwell* of the day/first of the following day is in the range of overnight stays, shall it be considered that there is sufficient information from a user to calculate his overnight stay. This is because it may happen that the last event of the day of a user does not correspond to an overnight stay (e.g., when a user takes an international trip, they would disappear from the network, but that last event would not be an overnight stay).

After that, in 3), the location of overnight stay *location_id_pernocta* is obtained, which corresponds to the location of the last *dwell* of the day if it is in the overnight stay interval, or to the location of the first *dwell* of the following day if there has been no overnight stay in the last *dwell* but rather, in the first *dwell* of the following day.

In 4) the start of the overnight stay *overnight_start_dt* is calculated, which is either the start of the last *dwell* of the day if it is in the overnight stay interval, or an arbitrary reference value if there has only been an overnight stay with the first *dwell* of the following day.

In (5) the end of the overnight stay *pernocta_end_dt* is calculated. If the *dwell* is continuous (same location on the last dwell of the day/first of the following day) and the end of the *dwell* first of the following day is in the overnight stay interval, then that value is taken as the end of the *dwell.* Regardless of whether the *dwell* is continuous, but if the first event of the following day starts within the overnight stay interval, then that value is the end of the *dwell.* When the last *dwell is* an overnight stay, but the first of the following day is not, then the *dwell* of the overnight stay is extended until the end of the day. When it is only an overnight stay the first *dwell* of the following day either ends when this *dwell* ends (if that end is within the overnight interval) or the value of its start is given as the end of the *dwell.*

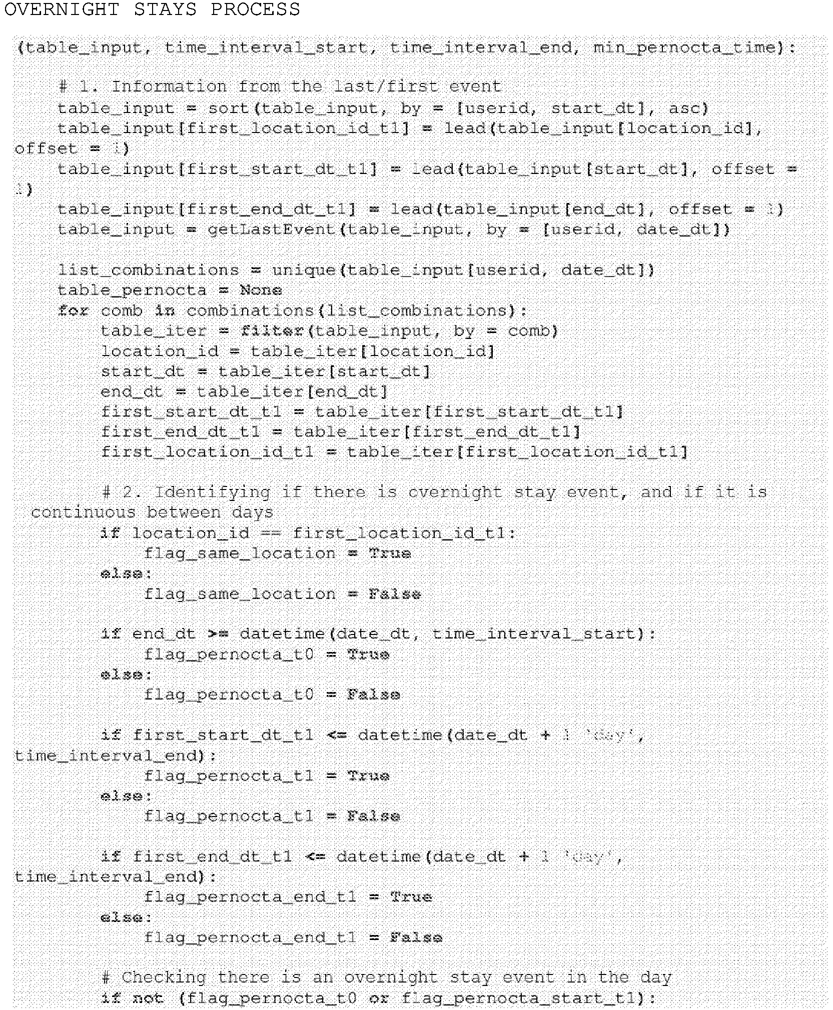

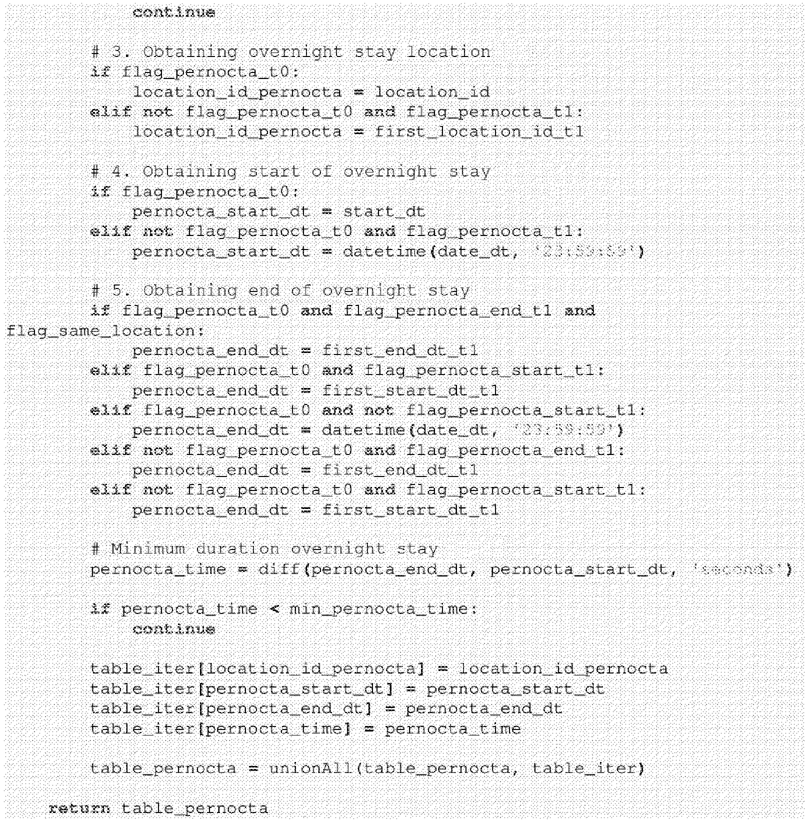

### - Algorithm to identify trips:

Identifying and calculating the duration of a journey, e.g. international, is not trivial when working with MNO data. The source of data that identifies when a domestic device is in another country is done through outbound roaming data, and this only indicates the day and country (or countries) where that device has been detected. The detection of the duration of an international trip requires the prior identification of the trip taken by a user, understanding the entire flow from the time they leave their place of residence until the time they return home. In relation thereto, a *trip* is defined as a journey made by a user in which there is an overnight stay at the destination.

The present invention provides an algorithm for identifying the entire trip route of a user, regardless of whether it has domestic legs and international legs. This algorithm is specified in the function CALCULATION_TRIPS, which receives as input the table of overnight stays within the domestic territory (calculated in the previous point, *table_pernocta* or second dataset), the table with the outbound roaming data (*table_outroaming* or third dataset), and a table called *table_userbase* or fourth dataset containing the location of the place of residence of each user, together with the *yearmon* (year-month) in which that POI Home/place of residence *(Home)* has been calculated (the same user may vary his place of residence from month to month). The ISO identifier (*country_code*) of the domestic country ("es" for Spain) can also be received, together with an offset to see the maximum number of days without signal that could be considered for a user within a single trip *(offset_days).*

From the *table_pernocta* table the following fields are used:
- *userid:* unique (hashed) device identifier associated with a user
- *date_dt:* date of the overnight stay
- *location_id:* unique location of the overnight stay (e.g., census tract code). Other granularity levels can be used).

From the *table_outroaming* table:
- *userid:* unique (hashed) device identifier associated with a user
- *date_dt:* event date
- *country_code_*destiny standard ISO code of the country of destination

From the *table_userbase* table:
- *userid:* unique (hashed) device identifier associated with a user
- *location_home:* location of the POI Home, using the same level of granularity as in the location_id.
- *yearmon:* year-month (YYYYmm) associated to this POI Home
- *country_code:* country code of the country of origin.

The first step is to preprocess *table_outroaming.* It could happen that the same user generates events on the same day in different countries (e.g., for a stopover, or crossing several borders on the way to the destination country). As only the day on which it is detected (and not the time) is known, the *chooseOne* function will choose a single day for each country. The criterion (when there are several countries in one day) is that when a user has been generating several roaming events in a row (without passing through his home country), the country that appears on both day *d* and day *d+1* is chosen as the overnight stay country. Thus, if, for example, a user is detected on day *d* in Andorra and in France, and on *d+1* in France (and on day *d* there has been no overnight stay in Spain), France is chosen as the destination country.

After this, those user-days in which there has been an overnight stay in domestic territory are removed from *table_outroaming,* thus assuming that they are not *trips* abroad, but outings. The two tables are then combined. This results in a table with a *location_id* which will be null when the user is abroad, and which otherwise will have an identifying value within the domestic territory. Similarly, but in reverse, the same applies to *country_code_destiny.*

Before proceeding to combine the data with the table containing the POI Home information, this second table is filtered to have only domestic users (since in the *dwells* and, therefore, in the overnight stays, there is also information on network events from international users).

After combining the tables and having the POI Home assigned, the table is sorted by each user-date, and is iterated through the information for each user. In this way, the different days are retraced, counting which of them are part of the same trip (steps) and when a new trip begins. As a prior step, the location, country and date of the overnight stay prior to each event are obtained (*location_id_tm1, country_code_destiny_tm1, date_dt_tm1* respectively). Thus, as soon as a user leaves (and spends the night) outside their place of residence, steps of the trip are counted, until they return to their place of residence, at which point the steps are no longer counted, the counter is reset, and the trip identifier is updated for the next trip. Additionally, and in particular for international trips, if the difference between a day and the day of the previous overnight stay exceeds a certain threshold (implying that all those days in between there has been no signal from the user), it is considered that from that day onwards it already corresponds to a new trip (something that could happen if a user returns home from an international trip, but their device is not switched on until they are away from his place of residence).

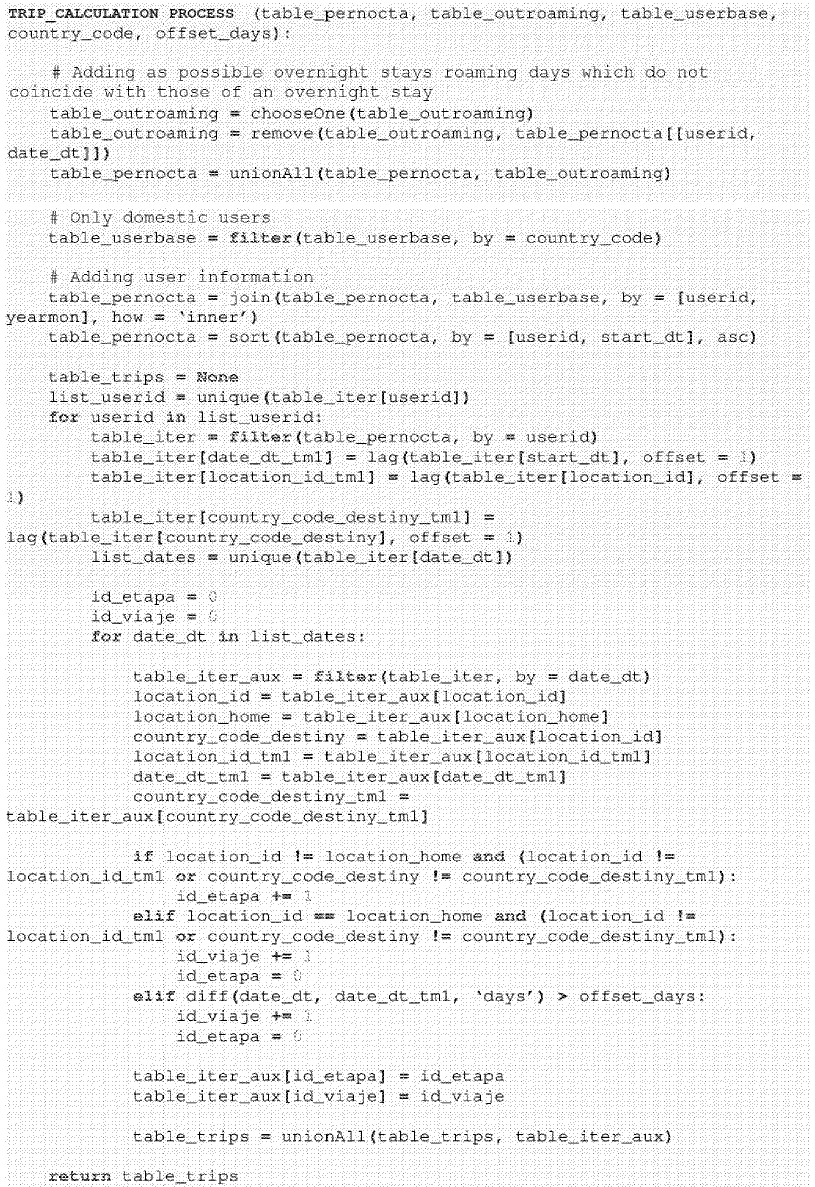

### - Algorithm to identify frequent destinations:

The algorithm for calculating the frequent destinations of a user is described below. This algorithm receives the following input parameters.

From the *table_input* table it includes the following fields:
- *userid:* unique (hashed) device identifier associated with a user
- *date_dt*: *dwell* date
- *yearmon:* year-month (YYYYmm) associated with these locations
- *location_id:* unique location of the *dwell* (e.g., census tract code). Other granularity levels can be used).

From the *table_userbase table:*
- *userid:* unique (hashed) device identifier associated with a user
- *location_home:* location of the POI Home, using the same level of granularity as in the location_id.
- *location_work:* location of the POI Work, using the same level of granularity as in the location_id.
- *yearmon:* year-month (YYYYmm) associated with those POls

This results in a table with the unique destinations per day *(table_destinies).* This table is combined with *table_userbase* to have the Home/Work POls identified. Then, the number of times this destination appears in the year-month is counted. No locations corresponding to the POI Home/Work are considered as frequent destinations.

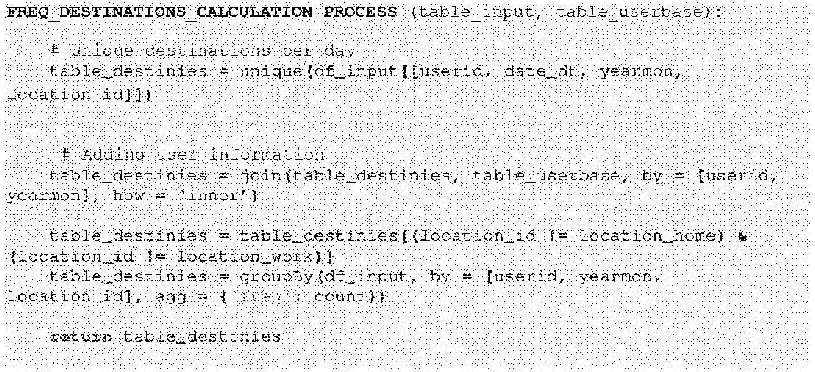

### - Algorithm to identify outings:

In addition to the previously expressed *trips* concept, the outings made by a user are obtained based on the information of the overnight stays and the information of the *dwells.* For this purpose, the algorithm CALCULO_EXCURSIONES is used, which receives data from previously calculated tables, as follows:
From the *table_input* table it includes the following fields:
   - *userid:* unique (hashed) device identifier associated with a user
   - *date_dt: dwell* date
   - *start_dt:* timestamp with the start of the *dwell*
   - *end_dt:* timestamp with the end of the *dwell*
   - *location_id:* unique location of the *dwell* (e.g., census tract code). Other granularity levels can be used).
   - *geometry_location_id:* area geometry (e.g., in *Well-known text representation,* WKT)
From the *table_pernocta* table the following fields are used:
   - *userid:* unique (hashed) device identifier associated with a user
   - *date_dt:* date of the overnight stay
   - *location_id:* unique location of the overnight stay (e.g., census tract code). Other granularity levels can be used).
From the *table_userbase* table:
   - *userid:* unique (hashed) device identifier associated with a user
   - *location_home:* location of the POI Home, using the same level of granularity as in the location_id.
   - *location_work:* location of the POI Work, using the same level of granularity as in the location_id.
   - *geometry_home_location:* area geometry (e.g., in *Well-known text representation,* WKT)
   - *yearmon:* year-month (YYYYmm) associated with those POls
   - *country_code:* country code of the country of origin.
From the *table_freq_destinies* table:
   - *userid:* unique (hashed) device identifier associated with a user.
   - *yearmon:* year-month (YYYYmm) associated with these locations.
   - *location_id:* unique location (e.g. the code of a census tract). Other granularity levels can be used).
   - *freq:* frequency (number of unique days) that the user has visited that location in that time period

In addition to these tables, the algorithm can receive the parameters *min_duration, min_distance* and *max_freq* which determine the minimum duration, the minimum distance to the residence and maximum frequency that can be considered for a *dwell* to be an outing.

In doing so, the process removes from the *dwells* table those locations that appear within *table_freq_destinies* a minimum number of times, and the locations where there has been an overnight stay on a given day. On that table, the minimum time of the *dwell* filter is applied and, after obtaining the centroids of the geometries of the home and destination locations, the distance between them is obtained to ensure that it exceeds a threshold value. No POI Home/Work locations are considered as part of the outings.

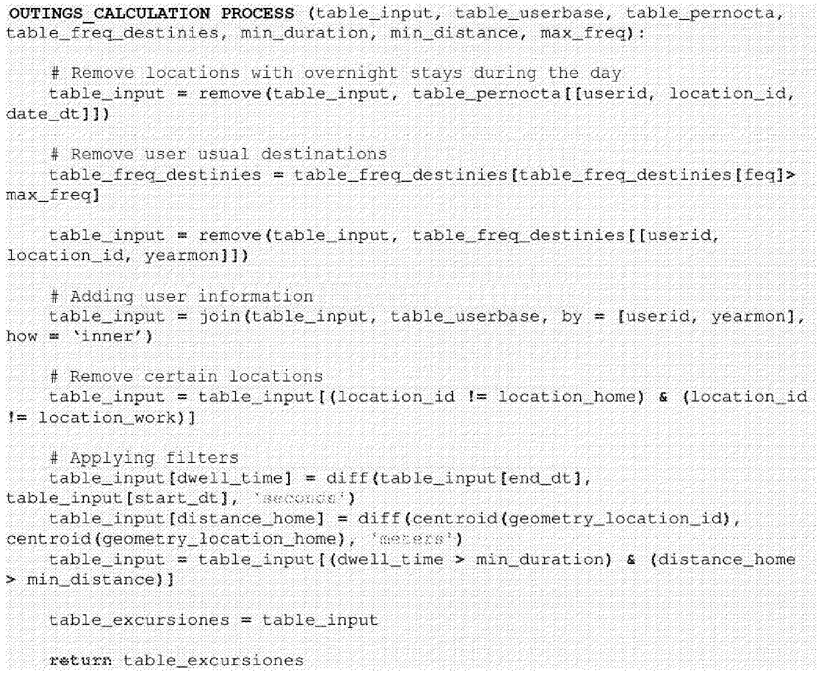

### - Calculating the browsing index:

With the BROWSING_INDEXES_CALCULATION algorithm, an index is obtained with the relative interest of the different web browsing categories according to the average domestic general interest regarding the same. As input table, *table_navegacion* (or fifth dataset) is provided with the fields:
- *userid:* unique (hashed) device identifier associated with a user
- *yearmon:* year-month (YYYYmm)
- *category:* browsing category, such as *Food* or *Pets.*
- *value:* total value (seconds) of browsing

The process first obtains the overall average value of interest, and then, for each user and category, obtains the interest index by dividing that user's browsing by the domestic monthly average.

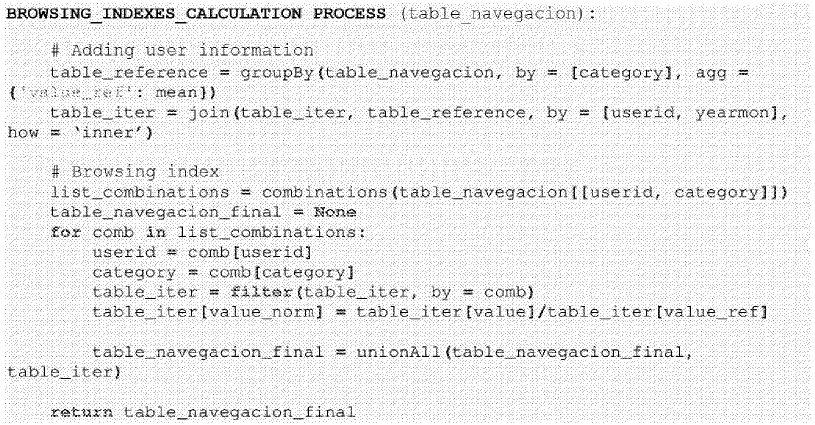

By way of example, different variables within the above categories are shown:
- Daily Mobility
   1. Total number of journeys made in a year
   2. Total number of journeys made on:
      ▪ Weekdays (e.g., Monday to Thursday)
      ▪ Weekend (e.g. Friday to Sunday)
   3. Total number of journeys made according to the time slot, differentiating between:
      ▪ Morning
      ▪ Afternoon
      ▪ Night
   4. Total number of journeys made for:
      ▪ Sporadic movements
      ▪ Usual journeys, in this case differentiating:
         - Home-based
         - Work-based
         - Other
   5. Total number of journeys made based on distance travelled, differentiating between:
      ▪ Short: Under 21 km
      ▪ Media: From 21 km to 65 km
      ▪ Long: From 66 km
- Travel
   1. Total number of trips by trip duration
      ▪ Up to 3 days
      ▪ From 4 to 6 days
      ▪ From 7 to 15 days
      ▪ More than 15 days
   2. Total number of trips per frequency:
      ▪ Occasional
      ▪ Recurrent
   3. Total number of trips by destination
      ▪ Domestic
      ▪ International
- Web Interests
   ∘ Food
   ∘ Pets
   ∘ Fashion
   ∘ Business
   ∘ Career and Training
   ∘ News
   ∘ Science
   ∘ Real Estate
   ∘ Shopping
   ∘ Advertising
   ∘ Online Communities
   ∘ Religion and Spirituality
   ∘ Sports
   ∘ Health
   ∘ Law and Politics
   ∘ Internet services
   ∘ Family and Parenthood
   ∘ Society
   ∘ Finance
   ∘ Hobbies and Interests
   ∘ Technology and Informatics
   ∘ Games
   ∘ Telecommunications
   ∘ Travel
   ∘ Art and Entertainment
   ∘ Automotive

With reference now to Figure 3, it shows another exemplary embodiment of the proposed method. In this case, the method in addition to the daily mobility, travel and web interest variables also obtains a socio-demographic user profile (gender, age and/or income level), which is then used to build micro-segments together with the variables used to characterise the profile of a specific location.

In an exemplary embodiment, the socio-demographic profiling to create the micro-segments is carried out with different statistical and/or *Machine Learning* (ML) models. These models partially use as input data some of the variables that are later used to make the aggregations to obtain the location profiling, together with other variables that are currently not included in the location profiling (although they could be included from a technical point of view).

With this, the present invention is responsible for extracting different types of variables that characterise users in order to extrapolate this information to the general population (not only that of a specific mobile network operator quota), and to aggregate this information by micro-segments, so that it can be cross-referenced with other databases. Additionally, and optionally, the profiling of said census tract can be completed with external data (e.g., data from national statistical branches, land registry data, etc.). The present invention demonstrates this process of incorporating external data through the use of various public databases.

### - Socio-demographic profile:

With this profiling, users are characterised and aggregations by micro-segments can be carried out, whereby the profile of a location is characterised on the basis of the users residing therein. By way of example, micro-segments could have the following categories:
1) Gender:
   ∘ Female
   ∘ Male
2) Age:
   ∘ From 18 to 29
   ∘ From 30 to 39
   ∘ From 40 to 49
   ∘ From 50 to 59
   o From 60 to 69
   o >=70
3) Income level
   ∘ Low
   ∘ Medium
   ∘ Medium High
   ∘ High

The manner to obtain the complete information on these micro-segments for the entire MNO user plant is shown below.

### - Algorithm for gender inference:

In case there are domestic users whose gender is unknown, a statistical model is applied thereto to be able to infer the same, taking into account external information such as gender distribution in the area where the user resides. In addition, user behavioural data could be used.

This algorithm is described in GENDER_CALCULATION. It receives as input the user base table (or fourth dataset) and the census information table (or sixth dataset), in addition to the year-month for which the calculation is to be made, and the domestic country identification code ('es' for Spain). This is because the user base also contains information on international users, but this process, being based on census information, is only applicable to domestic users.

From the *table_userbase table:*
- *userid:* unique (hashed) device identifier associated with a user
- *location_home:* location of the POI Home, using the same level of granularity as in the location_id.
   - *gender*: gender of the user, which is null when unknown.
- *yearmon:* year-month (YYYYmm) associated with those POls
- *country_code:* country code of the country of origin.

From the *table_census* table:
- location_id: census reference location
- gender_i: population in that area of gender i
- gender_k: population in that area of gender k.
- *year:* Census year

In this way, sampling is carried out without replacement (although it is also possible to do it with replacement). After filtering the initial tables for the observation period and for the domestic level, the different locations are traversed to make an inference of gender for users who have their place of residence therein (assuming that they reside where they are registered). Then, for each non-gendered user within that section, random sampling is done to obtain their gender, and being non-replacement, probabilities are adjusted based on the total census population by gender and the MNO database. If there are any locations where 100% of the population is available within the MNO data (or even higher if the actual population is estimated to be higher than the census), generic probabilities would be given in case there are still ungendered users. In the event that all user genders of a location are known, nothing would be done.

The final inferred gender values would be added to the user database (*table_userbase_filled*).

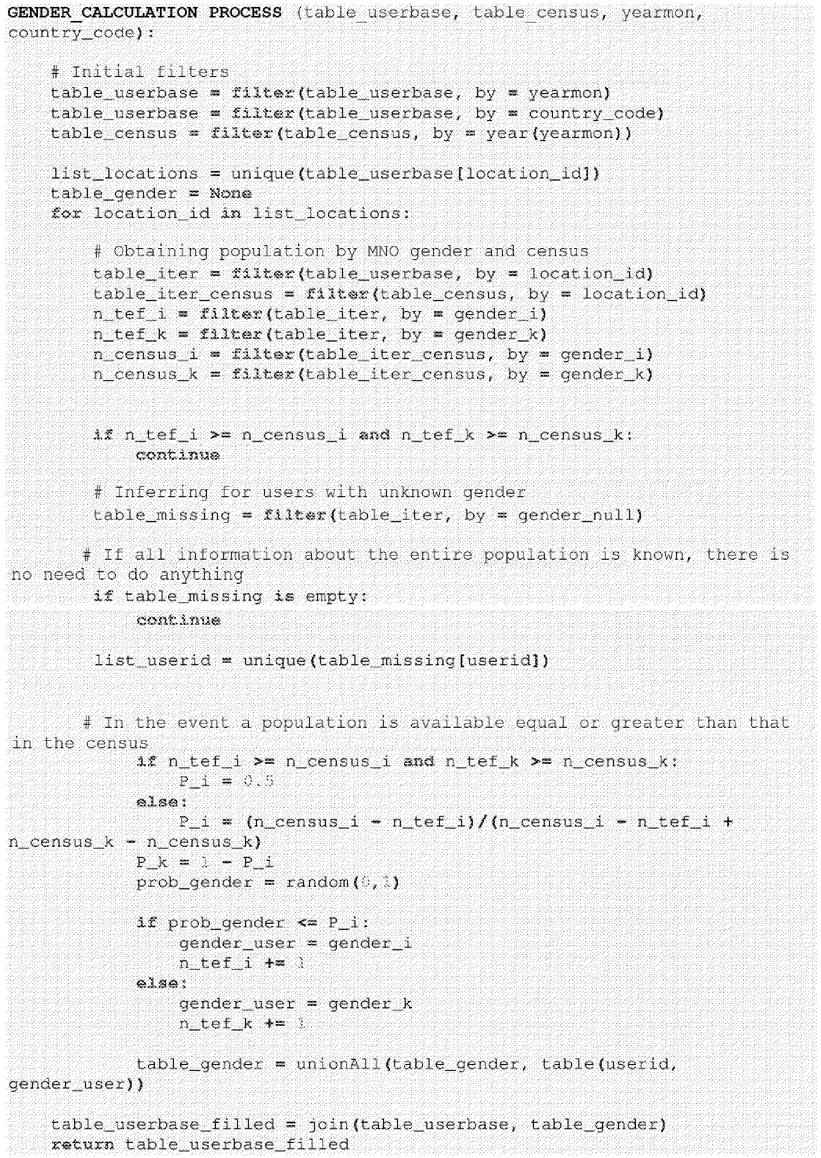

### - Algorithm for age band inference:

Another step in the process is the prediction of user age bands using a supervised ML model. In this case, a *ground truth* of actual user ages is available, which is used to infer the age of the rest of the plant for which the age is unknown. The users in the operation are always over 18 years of age.

The problem is addressed as a supervised multi-class classification problem, using the LightGBM ML algorithm (although other supervised ML algorithms could be used). The reason why LightGBM is used is because the distribution of users by age band is not homogeneous, and this model is robust for making predictions with this problem.

The training process of the model is described in MODEL_TRAINING, which receives the input variables per user, the actual age data, and additionally, information on the age distribution of the MNO users. This is an important detail, as being trained on the MNO data and trying to predict the age of the plant users forces the model to be biased by a priori knowledge of the overall age distribution of MNO customers. To include this information a *resampling* of the training data is carried out to reflect this casuistry. The *resampling* can be done with *oversampling* techniques (such as SMOTE) or *undersampling* techniques (such as ClusterCentroids).

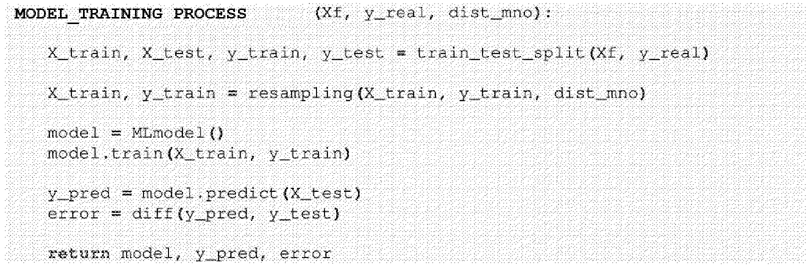

The cost function that the model seeks to minimise is described below. $\begin{matrix}Q = f \left({X}_{f}\right) \\ L = {\sum }_{k}^{K} {\sum }_{n}^{N} - \left(P\left(i, k\right)\times log \left(Q\left(i, k\right)\right)\right) \\ min \left(L\right)\end{matrix}$

Wherein Q is the matrix of the prediction of age bands per user with the ML model based on the input variables that model the behaviour of that user *X_{f}.*

This model is trained by seeking to minimise the cost function L, which reflects the cross-entropy, with the predictions Q, the actual values P, the number of classes (age bands) K and the number of users N.

### - Algorithm for income level inference:

This section describes the process of inferring user income level based on the MNO data. The process appears in INCOME_LEVEL_INFERENCE, where the input variable table that models user behaviour is received, together with the census information table with the income level of each location, a user database table, and a prototype table (or seventh dataset), which include specific users who have already identified their income level based on an a priori expert analysis. Along with this, we have the parameters for the anomaly detection model, and the number of income levels (*n_grupos*).

From the *table_userbase* table:
- *userid:* unique (hashed) device identifier associated with a user
- *location_home:* location of the POI Home, using the same level of granularity as in the location_id (for domestic users).
- *yearmon:* year-month (YYYYmm) associated with those POls
- *country_code:* country code of the country of origin.

From the *table_census* table:
- location_id: census reference location
- *income_level:* income level at that location.
- *Year:* Census year

From the *table_prototypes* table:
- userid: unique (hashed) device identifier associated with a user
- *income_level:* income level of that user.

After the initial filters, the process identifies in an unsupervised manner those users who have anomalous behaviour (in terms of input variables) and should therefore not be included in the subsequent clustering model. This anomaly detection is done with the unsupervised ML algorithm Isolation Forest, although other alternatives could be used. After removing these users, a clustering model is applied using the K-Means algorithm (although others could be used), where the number of clusters (as many as income levels) is pre-specified. After assigning each user to a cluster, the *mapeoGrupos* function is applied where, based on the users that are pre-identified with the income level, each of the clusters is identified with a specific income level.

After this, for users with anomalous behaviour, they are assigned by default the rental value of the area of their place of residence, which is provided by the census information.

The last step consists of the evaluation of the results, where a clustering metric value (such as the BIC) is viewed, together with a comparison of the distributions by income level of the groups inferred from the clustering model versus the distribution based on the census data. This comparison can be done at the level of the entire country, or at some intermediate geographic grouping level.

Finally, the table from the clustering model is combined with the table of the anomalous users to get the income level of the entire plant.

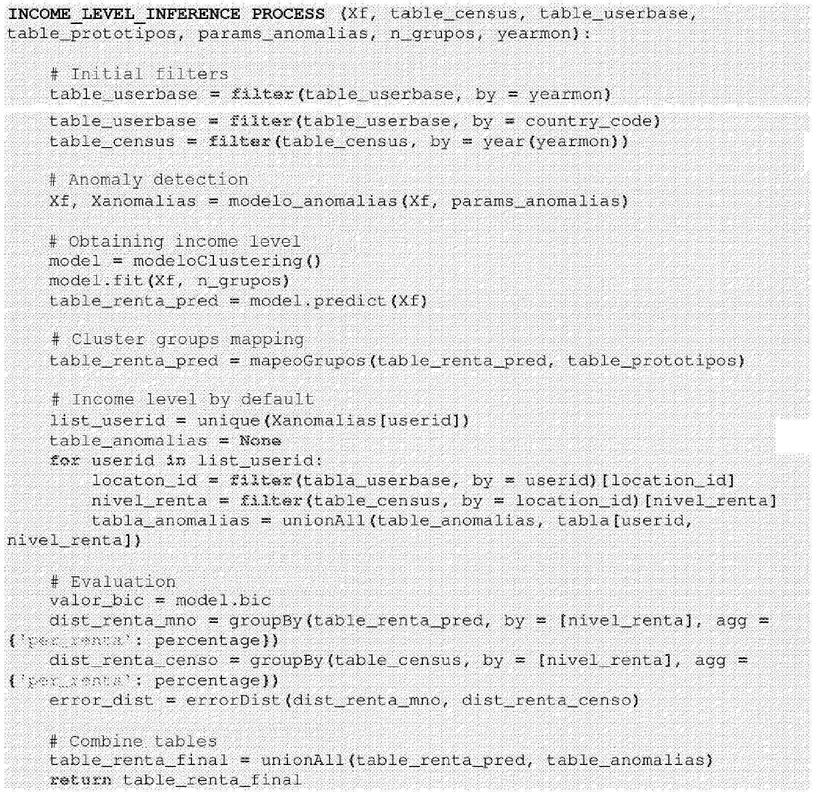

### - User extrapolation:

As the MNO data only collect information from a part of the entire population (according to its market share), it is necessary to raise the same for the entire population in order to reflect the overall information. There are different approaches for performing this extrapolation process, such as the use of ML algorithms described in application EP3839917.

For the present invention, the extrapolation is done at the level of the individual user, assigning a statistical weight according to the market penetration of the MNO in the area of residence of said user. Generally speaking, the algorithm will use two types of sources: the census source (to extrapolate domestic users) and the tourism survey source (to extrapolate international users). This algorithm is described below. First, the input data tables are described. These tables refer to census data and foreign tourism surveys.

From the *table_userbase_filled* table:
- *userid:* unique (hashed) device identifier associated with a user
- *location_home:* location of the POI Home, using the same level of granularity as in the location_id (for domestic users).
- *gender:* user gender.
- *ageband:* user age band.
- *yearmon:* year-month (YYYYmm) associated with these POls
- *country_code:* country code of the country of origin.

From the *table_census* table:
- location_id: census reference location
- *gender:* gender category.
- *ageband:* age category.
- *population:* census population for the previous category combinations.
- *year:* census year.

From the *table_tourism_surv* table:
- *country_code:* country of origin of tourists.
- *yearmon:* year-month (YYYYmm) associated with this data.
- *population:* total number of visitors according to the above combinations of categories

With this, the EXTRAPOLATION process carries out the calculation of the weights, which is done on the one hand for domestic users and on the other hand for international users. For domestic users, it is iterated through the reference list of location-gender-age range combinations. In case the userbase has users within that combination, the quotient of the census population between that of the MNO data gives the value of the statistical weight. If there are no users for a specific location (*checkAllCombinations*), instead of with the geographic level being used, the extrapolation is done with a higher one for all affected locations. For example, if there is no MNO population in a census tract, it is extrapolated with the district-level population for all census tracts in the same district as the census tract with no population. Moreover, if MNO user data are not available for all gender-age combinations in a location, instead of extrapolating with the whole combination of categories, for that location, it is only extrapolated with the total population of the location. In the case of international users, the process is analogous, but using external sources of information, e.g. tourism surveys, and considering data from the country of residence.

For both extrapolations the user weight is rounded to a whole number, and this weight cannot be less than 1. Once the statistical weight for domestic/international users is obtained, this information is combined to generate the new userbase (i.e. to update the fourth dataset).

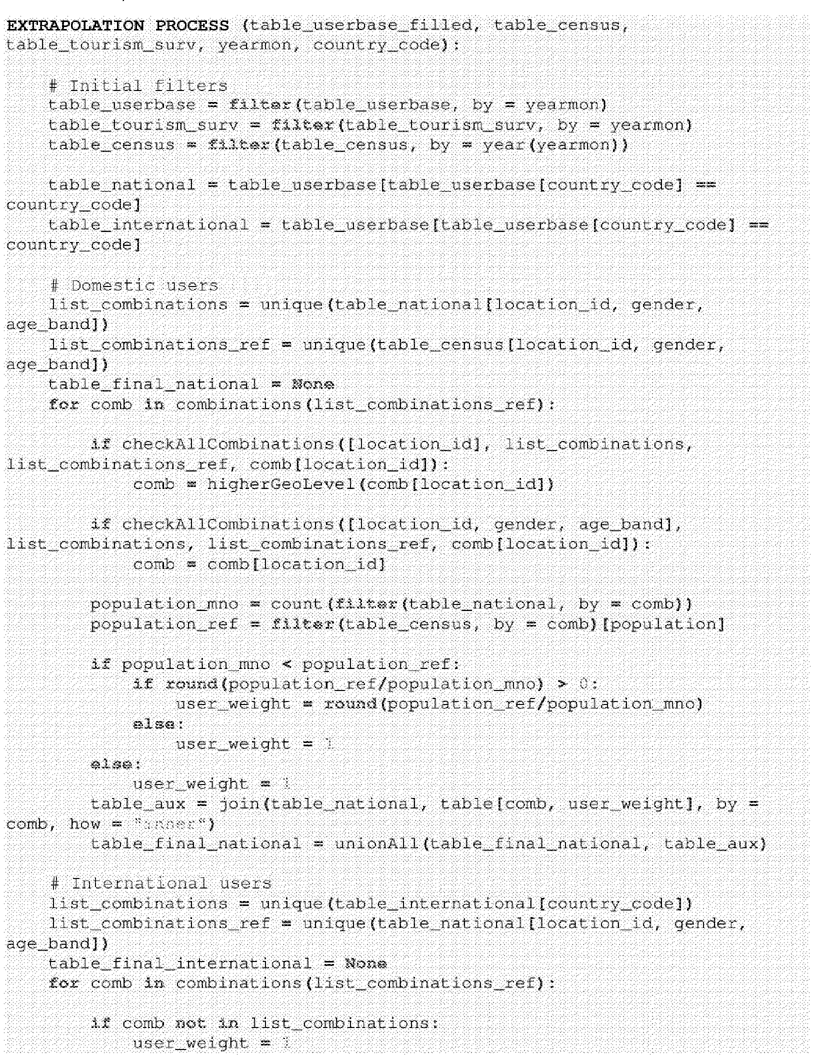

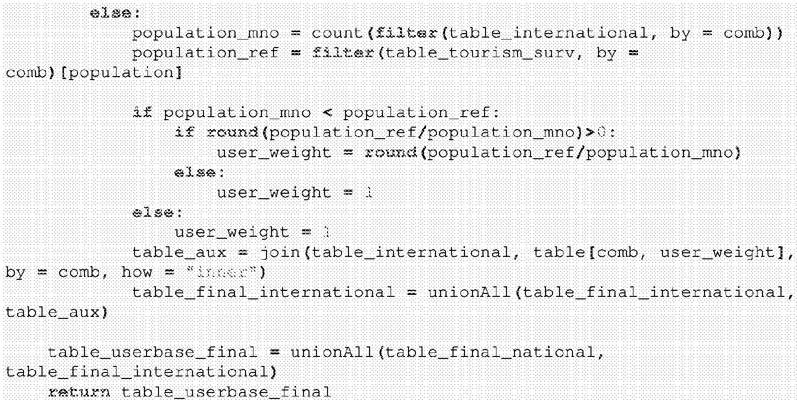

The process described above results in aggregates of information by micro-segment, defined by location, age band, gender and income level. Due to these micro-segments, location profiling can be enriched with other sources of information by cross-referencing data across one or more of these micro-segment fields. Considering only location information, the profiling of the same can be completed with connectivity variables (access to public transport, metro, bus...), household variables (average household size, composition, number of households...), or urbanity variables (typology of dwellings based on their age, size and type of facilities; typology of the area depending on whether it is residential, commercial/leisure or offices...). Figure 4 shows an outline of this proposal, including references to open data sources to obtain the variables described above in the case of location profiling in Spain.

The proposed invention can be implemented in hardware, software, firmware or any combination thereof. If it is implemented in software, the functions can be stored in or coded as one or more instructions or code in a computer-readable medium.

As used herein, the computer programme products comprising computer-readable media include all forms of computer-readable media, except to the extent that such media is not considered to be non-established transient propagation signals.

The scope of the present invention is defined in the attached claims.

## Claims

1. A computer-implemented method for characterising geographic areas, comprising:
- accessing user data from a mobile network operator, said data being associated with active and/or passive network events from the connections established between user mobile devices and mobile network operator towers;
- calculating a set of user parameters using said accessed data, calculating the set of parameters comprising: calculating a visit parameter, calculating points of interest of each user, and obtaining user web browsing data from the mobile devices based on obtaining network traffic from each mobile device in the network;
- determining a characterisation profile of a geographic area by calculating the behaviour of the temporary and permanent resident users in said geographic area, said calculation of the behaviour of the resident users including:
- calculating a first set of variables related to the daily mobility of resident users based on the determination of when and where an overnight stay has taken place using a first dataset including a unique identifier of the mobile device of each resident user and parameters associated with the calculated visit parameter and configurable parameters indicating the hours at which a network event must be found to be considered an overnight stay;
- calculating a second set of variables related to resident user trips based on the calculation of at least two of:
identifying the travel route of resident users using at least a second dataset including information on overnight stays within the domestic territory, a third dataset related to roaming and a fourth dataset including information on the unique identifier of the mobile device of each resident user and parameters associated with the calculated points of interest,
identifying frequent destinations of resident users using the first dataset and the fourth dataset,
identifying outings made by resident users using at least the first dataset, the second dataset, the fourth dataset and information from the identified frequent destinations;
- calculating a third group of variables related to web browsing by resident users based on:
determining an average interest index per browsing category using a fifth dataset including the unique identifier of the mobile device of each resident user, a time period associated with web browsing, a web browsing category and web browsing total time, and
determining an individual interest index, per resident user and category, by dividing a particular resident user web browsing by the average interest index determined.

2. The method according to claim 1, wherein determining the characterisation profile of the geographic area further comprises calculating a socio-demographic profile of the resident users, including gender, age band and/or income level, using said data associated with active and/or passive network events.

3. The method according to claim 2, further comprising assigning a statistical weight to each resident user using census information from the geographic area for domestic resident users and information obtained from external information sources for international resident users, and combining the assigned statistical weights by updating the fourth dataset as a result.

4. The method according to claim 3, further comprising extrapolating the calculation of the behaviour of the resident users in said geographic area and the fourth dataset updated to the general population and aggregating the extrapolated information by micro-segments based on a location of the geographic area and the age band, gender and income level of the resident users.

5. The method according to claim 4, further comprising using one or more sources of information comprising connectivity variables, including access to public transport, metro, and/or bus; household variables, including average household size, composition, and/or number of households; and/or urbanity variables, including typology of dwellings based on age, size and type of facilities; typology of the area based on whether it is residential, commercial/leisure or office.

6. The method according to any one of the preceding claims, wherein calculating the visit parameter is performed by aggregating a certain continuous number of network events at the given geographic location, said continuous number of network events having a predefined minimum duration.

7. The method according to claim 6, wherein calculating the points of interest comprises executing machine learning models on the calculated visit parameters.

8. The method according to any one of the preceding claims, wherein the calculated points of interest include at least the identification of the user place of residence and place of work.

9. The method according to any one of the preceding claims, wherein the active network events comprise Call Detail Records, CDRs, including phone calls made by the mobile devices, and Extended Detail Records, XDRs, including web browsing information from the mobile devices.

10. The method according to the preceding claims, wherein the passive network events comprise information regarding power-on, coverage recovery, cell change and/or network change of mobile devices.

11. The method according to the preceding claims, wherein the calculation of the visit parameter further comprises detecting and eliminating flickering/intermittency events between network towers.

12. The method according to claim 1, wherein the first group of variables related to the daily mobility of resident users comprises one or more of: total number of journeys made in a year, total number of journeys made on weekdays and/or weekends, total number of journeys made in the morning, afternoon and/or evening, total number of journeys made for sporadic and regular journeys, and total number of journeys made based on distance travelled, differentiating between short, medium and long journeys.

13. The method according to claim 1, wherein the second set of variables related to resident user trips comprises one or more of: total number of trips by duration thereof, total number of trips by frequency, and total number of trips by domestic or international destination.

14. The method according to claim 1, wherein the third group of variables related to web browsing by resident users comprises which types of web pages/applications resident users consult, including one or more of: food, arts and entertainment, science, sports, games, family, animals, society, fashion, travel, shopping, health, among others.

15. A system for characterising geographic areas, comprising:
a memory or database configured to store user data from a mobile network operator, said data being associated with active and/or passive network events from the connections established between user mobile devices and mobile network operator towers;
a computing unit including a memory and at least one processor, wherein the processor is adapted and configured to characterise a geographic area by performing the following steps:
- calculating a set of user parameters using said accessed data, calculating the set of parameters comprising: calculating a visit parameter, calculating points of interest of each user, and obtaining user web browsing data from the mobile devices based on obtaining network traffic from each mobile device in the network;
- determining a characterisation profile of a geographic area by calculating the behaviour of the temporary and permanent resident users in said geographic area, said calculation of the behaviour of the resident users including:
- calculating a first set of variables related to the daily mobility of resident users based on the determination of when and where an overnight stay has taken place using a first dataset including a unique identifier of the mobile device of each resident user and parameters associated with the calculated visit parameter and configurable parameters indicating the hours at which a network event must be found to be considered an overnight stay;
- calculating a second set of variables related to resident user trips based on the calculation of at least two of:
identifying the travel route of resident users using at least a second dataset including information on overnight stays within the domestic territory, a third dataset related to roaming and a fourth dataset including information on the unique identifier of the mobile device of each resident user and parameters associated with the calculated points of interest,
identifying frequent destinations of resident users using the first dataset and the fourth dataset,
identifying outings made by resident users using at least the first dataset, the second dataset, the fourth dataset and information from the identified frequent destinations;
- calculating a third group of variables related to web browsing by resident users based on:
determining an average interest index per browsing category using a fifth dataset including the unique identifier of the mobile device of each resident user, a time period associated with web browsing, a web browsing category and web browsing total time, and
determining an individual interest index, per resident user and category, by dividing a particular resident user web browsing by the average interest index determined.

16. A computer program product including code instructions which, when executed in a computer system, implement a method according to any one of claims 1 to 14.
